# EUROPEAN PATENT APPLICATION

(11) **EP 1 675 399 A2**
(43) Date of publication of application: **28.06.2006**
(21) Application number: 05257944.8
(22) Date of filing: 21.12.2005
(51) Int. Cl.: H04N 7/173

(54) **Fast channel switching for digital TV**

(30) Priority: 23.12.2004 US 638534 P
(71) Applicant: Bitband Technologies Ltd., 42504 Netanya (IL)
(72) Inventor: Cohen, Noam, Binyamina 30500 (IL)
(74) Representative: Pedder, James Cuthbert

(57) **Abstract**

A method for digital video distribution includes transmitting a multicast stream (70) over a network (20). Upon receiving, at a time subsequent to a first anchor point and prior to a second anchor point in the multicast stream, a request from a client (30) to begin receiving the multicast stream, a boost stream (80) is generated, including at least a portion of the video data in the frames (72, 74, 76, 78) between the first and second anchor points. The boost stream is transmitted to the client during an interval between the time at which the request was received and the second anchor point in the multicast stream, so as to cause the client to display the video data beginning from the first anchor point. Upon completing transmission of the boost stream, the multicast stream is transmitted to the client beginning from the second anchor point.

## Description

### FIELD OF THE INVENTION

The present invention relates generally to multimedia multicasting over packet networks, and specifically to facilitation of channel switching by a client of such multicasting.

### BACKGROUND OF THE INVENTION

Streamed movies with video and audio, such as movies produced according to one of the Moving Picture Experts Group (MPEG) standards, comprise a number of types of frames:
● Intracoded frames (I-frames), which are self-contained images, similar to JPEG-encoded still pictures (JPEG: Joint Photographic Experts Group).
● Predictive frames (P-frames), which may incorporate differences from a prior frame.
● Bi-directional frames (B-frames) which may incorporate differences from a prior and a subsequent frame.
The sequence of I, P and B frames forms a byte stream, which is broken up into variable-length packets in a packetized elementary stream (PES). The PES packets may be packaged inside fixed-sized transport stream packets. Further information regarding these and other aspects of the MPEG standards, such as MPEG-2, may be found at www.chiariglione.org/mpeg/standards.htm.

U.S. Patent Application Publication 2004/0255328 describes a technology for facilitating the presentation of digital video streams, and specifically for reducing the effective start-up delay in the presentation of the first frames of video content when a system tunes into a video stream. The delay is incurred because upon user selection of a video-stream channel, the receiver must wait for the next random access point (RAP), such as an I-frame, before it can access the video stream and start buffering and presenting the channel. To reduce the delay, a multicast system transmits to the user both a main multicast video stream and a number of lead-in alternative multicast video streams with staggered RAP phases. When the user selects a channel, the receiver queries the multicast server in order to determine which of the alternative streams is the first lead-in that has not yet started, and then joins that alternative stream. The alternative stream serves as a "bridge" until the receiver can start receiving the next RAP of the main stream.

PCT Patent Publications WO 2004/114667 and WO 2004/114668 describe encoding and decoding methods and apparatus that are said to enable fast channel change of compressed video. The encoder includes a normal encoding portion for providing normal stream data and a lower-quality encoding portion for providing channel change stream data. A multiplexer combines the normal and channel change data streams. The decoder includes a demultiplexer, which separates the normal stream and the channel change stream.

### SUMMARY OF THE INVENTION

Embodiments of the present invention provide improved methods and systems for packetized streaming of digital media, which shorten the time between switching channels and displaying the new channel at a receiver. For this purpose, a service provider temporarily stores one or more recent frames from a multicast video stream in each of the channels for which fast switching is enabled. The stored frames go back to the most recent anchor point in the stream, meaning a point in the stream from which a decoder can begin to decode and display the streaming content. In the case of MPEG, the I-frames can serve as the anchor points.

When a client selects a new channel, and the time remaining until the anchor point in the new channel stream exceeds a predetermined threshold, the service provider immediately transmits a "boost stream" to the client. This boost stream begins from a recent anchor point, and may include other intermediate frames, as well, such as P-frames in an MPEG stream. The length of the boost stream is chosen so as to fill the time gap until the next anchor point in the new channel stream. Upon conclusion of the boost stream, the service provider joins the client to the multicast stream of the new channel.

Although the embodiments described herein refer specifically to MPEG standards and use MPEG terminology, the principles of the present invention may similarly be applied in digital broadcast systems using other compression and packet transport schemes. Therefore, in the context of the present patent application and in the claims, the term "intracoded frame" (or I-frame) should be understood as referring to any frame that can serve as an anchor point, while the term "difference-coded frame" should be understood as referring to any frame that is compressed by encoding differences from a preceding and/or succeeding frame.

There is therefore provided, in accordance with an embodiment of the present invention, a method for digital video distribution, including:
transmitting a multicast stream over a network, the stream including a sequence of frames encoding video data, the sequence containing anchor points;
receiving, at a time subsequent to a first anchor point and prior to a second anchor point in the multicast stream, a request from a client to begin receiving the multicast stream;
responsively to the request, generating a boost stream including at least a portion of the video data in the frames between the first and second anchor points;
transmitting the boost stream to the client during an interval between the time at which the request was received and the second anchor point in the multicast stream, so as to cause the client to display the video data beginning from the first anchor point; and
upon completing transmission of the boost stream, transmitting the multicast stream to the client beginning from the second anchor point.

In some embodiments, the sequence of frames includes intracoded frames (I-frames) interspersed with difference-coded frames, and each of the anchor points corresponds to one of the I-frames. Typically, the boost stream includes a first I-frame, which corresponds to the first anchor point, and further includes a subset of the difference-coded frames between the first I-frame and a second I-frame, which corresponds to the second anchor point. In one embodiment, the difference-coded frames include predictive frames (P-frames) and bi-directional frames (B-frames), and the subset of the difference-coded frames includes one or more of the P-frames, but not the B-frames.

In disclosed embodiments, generating the boost stream includes determining a number of the frames between the first and second anchor points to be included in the boost stream responsively to a duration of the interval between the time at which the request was received and the second anchor point in the multicast stream. Additionally or alternatively, the multicast stream is transmitted at a base bit rate, and transmitting the boost stream includes conveying the boost stream to the client at an increased bit rate relative to the base bit rate. Further additionally or alternatively, the video data in the multicast stream include compressed data, and transmitting the boost stream includes compressing the video data in the boost stream more strongly than the video data in the multicast stream.

In some embodiments, the multicast stream is encoded so as to cause the client to wait before displaying the video data for a predetermined delay after receiving an initial frame of the video data, and transmitting the boost stream includes encoding the boost stream so as to cause the client to begin to display the video data in the boost stream with a reduced delay, which is shorter than the predetermined delay.

There is also provided, in accordance with an embodiment of the present invention, a multicast transmitter, which is operative to transmit a multicast stream over a network, the stream including a sequence of frames encoding video data, the sequence containing anchor points, the multicast transmitter including:
a memory, which is coupled to store the video data; and
boost generation logic, which is coupled to the memory and is arranged to receive, at a time subsequent to a first anchor point and prior to a second anchor point in the multicast stream, a request from a client to begin receiving the multicast stream, and to generate, responsively to the request, a boost stream including at least a portion of the video data in the frames between the first and second anchor points, and to convey the boost stream to the client during an interval between the time at which the request was received and the second anchor point in the multicast stream, so as to cause the client to display the video data beginning from the first anchor point, and to cause the transmitter, upon completing transmission of the boost stream, to transmit the multicast stream to the client beginning from the second anchor point.

In disclosed embodiments, the transmitter is arranged to transmit multiple channels of video content to multiple clients, and the request includes an instruction from a user viewing a first channel to switch to a second channel. In one embodiment, the boost generation logic includes a plurality of builders, which are dynamically assignable to produce boost streams for the multiple channels responsively to channel switching requests.

There is additionally provided, in accordance with an embodiment of the present invention, a computer software product, for use in conjunction with a multicast transmitter, which transmits a multicast stream over a network, the stream including a sequence of frames encoding video data, the sequence containing anchor points, the product including a computer-readable medium in which program instructions are stored,
wherein the instructions, when read by a computer associated with the transmitter, cause the computer to accept, at a time subsequent to a first anchor point and prior to a second anchor point in the multicast stream, a request from a client to begin receiving the multicast stream, and to generate, responsively to the request, a boost stream including at least a portion of the video data in the frames between the first and second anchor points, and to convey the boost stream to the client during an interval between the time at which the request was received and the second anchor point in the multicast stream, so as to cause the client to display the video data beginning from the first anchor point, and to cause the transmitter, upon completing transmission of the boost stream, to transmit the multicast stream to the client beginning from the second anchor point.

The present invention will be more fully understood from the following detailed description of the embodiments thereof, taken together with the drawings in which:

### BRIEF DESCRIPTION OF THE DRAWINGS

Fig. 1 is a block diagram that schematically illustrates a packetized video multicast system, in accordance with an embodiment of the present invention;
Fig. 2 is a block diagram that schematically illustrates a multiplexer operated by a network service provider, in accordance with an embodiment of the present invention;
Fig. 3 is a flow chart that schematically illustrates a method for channel switching, in accordance with an embodiment of the present invention;
Fig. 4 is a timing diagram that schematically illustrates construction and transmission of a boost stream, in accordance with an embodiment of the present invention; and
Figs. 5A and 5B are plots that schematically illustrate fill levels of a video buffer in a client terminal, in accordance with an embodiment of the present invention.

### DETAILED DESCRIPTION OF EMBODIMENTS

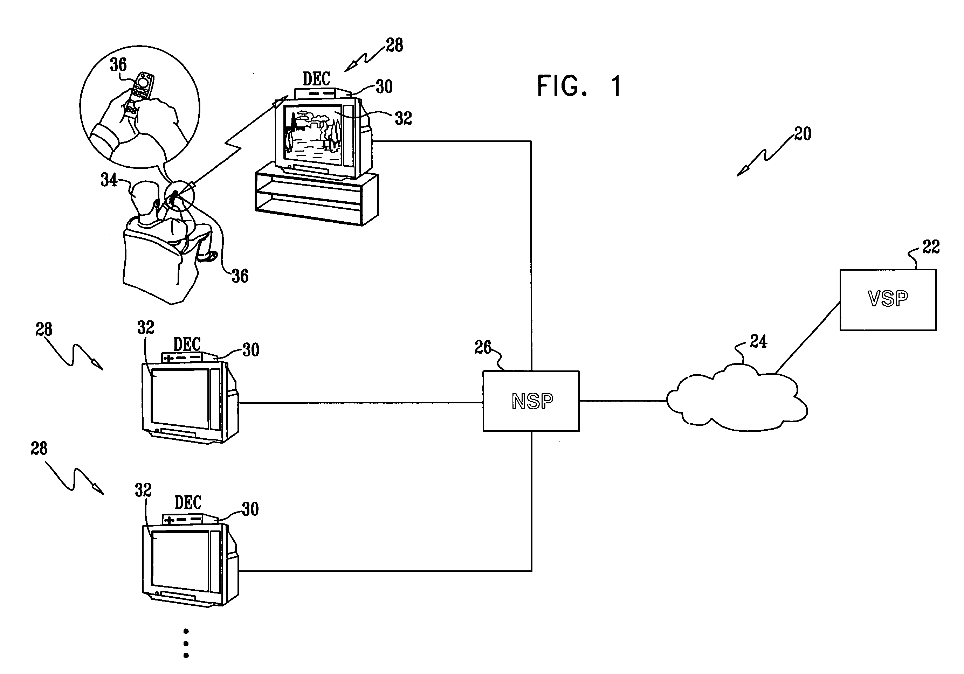

Fig. 1 is a block diagram that schematically illustrates a system 20 for packetized video multicast, in accordance with an embodiment of the present invention. A video service provider (VSP) 22 transmits a set of multicast video channels through a backbone packet network 24, such as the Internet. A network service provider (NSP) operates an access multiplexer 26, which serves as a multicast transmitter. Multiplexer 26 receives the multicast streams from VSP 22 and distributes the streams to client terminals 28 (which are also referred to herein simply as "clients"). Although only a single VSP is shown in Fig. 1, in practice the NSP may receive and distribute multicast streams from multiple different VSPs and may also serve itself as a VSP. In the pictured embodiment, each terminal 28 comprises a video decoder 30, such as a set-top box, which is connected to a television set 32. Alternatively, the terminals may comprise personal computers or any other type of suitable hardware known in the art.

A user 34 of client terminal 28 selects a channel for viewing using a controller 36, such as a remote control device. When the user enters a channel selection, decoder 30 sends a request to multiplexer 26 asking to "join" the selected channel. The multiplexer responds by transmitting the multicast stream of this channel to the decoder. When the user subsequently switches channels, the decoder sends a request to the multiplexer to "leave" the previous channel, followed by a request to join the new channel. In order to reduce the time elapsed between the user's selection of the new channel and the display of new channel content on television set 32, multiplexer 26 may initially transmit a boost stream following the channel switch, as described hereinbelow.

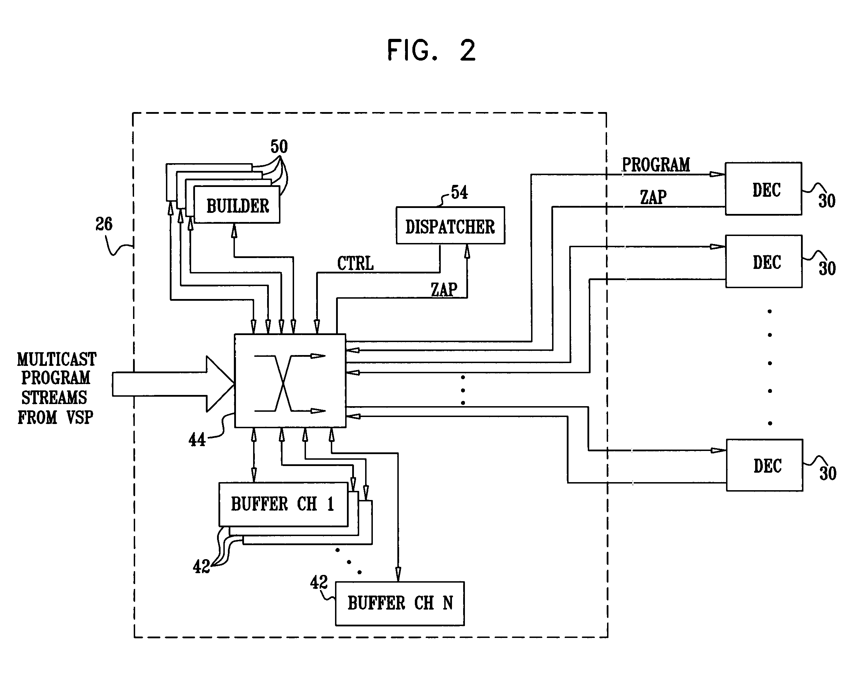

Fig. 2 is a block diagram that schematically shows details of access multiplexer 26, in accordance with an embodiment of the present invention. In practical implementations, such a multiplexer would typically be used in conjunction with hardware that provides network access multiplexing functions, such as in a Digital Subscriber Line Access Multiplexer (DSLAM). Various possible configurations for integration of the multicast function with an access multiplexer, either as an external unit or as a part of the access multiplexer itself, will be apparent to those skilled in the art. For the sake of simplicity, Fig. 2 shows only the multicast functions of such an integrated system.

As shown in Fig. 2, the multicast functions of multiplexer 26 are built around a switch 44, which receives packets belonging to multiple program streams from VSP 22 and sorts the packets by multicast channel. (The different channels are identified in the figure as CH 1, CH 2, ..., CH N.) In this embodiment, for clarity of explanation, the streams are assumed to be MPEG-2 transport streams, but the principles of the present invention may similarly be applied to packetized media streams of other types, as noted above. The transport streams typically contain both video and accompanying audio data, along with signaling information, such as timing and program identity, as provided by the applicable standards. Switch 44 distributes each program stream to decoders 30 of clients that have joined the corresponding channel.

Switch 44 also directs each channel to a respective buffer 42, which comprises a memory for storing a recent set of one or more pictures transmitted over the channel. These pictures are used in generating a boost stream, as described hereinbelow, when a client asks to join the channel. The frames stored in buffer 42 typically include the most recent I-frame and may include one or more difference-coded frames, particularly P-frames.

When one of the clients changes channels, switch 44 passes the client's join request ("zap") to boost generation logic, comprising a dispatcher 54 and builders 50. The dispatcher determines the status of the requested multicast stream, and then either instructs switch 44 to connect the client to the stream immediately or chooses one of builders 50 to construct and transmit a boost stream to the client. (Meanwhile, the switch continues to pass the multicast stream through to clients who have already joined the assigned channel.) Builder 50 selects and processes frames from the appropriate buffer 42 for use in generating the boost stream for the requested channel, and transmits the boost stream via switch 44 to the client, as described hereinbelow. Upon conclusion of the boost stream, dispatcher 54 (or alternatively builder 50) instructs switch 44 to connect the client to the appropriate multicast program stream.

Typically, builders 50 are assigned dynamically by dispatcher 54 to serve specific channels depending on client requests. In this manner, a relatively small number of builders can serve a large number of clients. In some cases, a builder may serve two or more clients that have asked to join a particular channel within a certain time interval of one another, thus increasing the efficiency of use of builder resources. The operator of multiplexer 26 can choose to deploy an optimal number of builders by trading off cost against service. (If the operator deploys a small number of builders, and there is consequently no builder available when a given client submits a join request, dispatcher 54 will simply instruct switch 44 to connect the client to the corresponding multicast stream without an intervening boost stream. The lack of an available builder will cause an increase in the channel switching latency, but no loss of service.) Alternatively, builders may be statically assigned to certain clients or groups of clients, or to certain multicast channels.

Fig. 2 shows the conceptual and functional structure of multiplexer 26, and does not necessarily reflect the actual hardware and/or software configuration of such apparatus, as will be apparent to those skilled in the art. The logical and switching functions of the multiplexer may be carried out by dedicated or programmable hardware, or by a general-purpose computer processor with appropriate software, or by a combination of hardware and software elements. The software may be downloaded to the multiplexer in electronic form, over a network, for example, or it may be provided on tangible media, such as optical, magnetic, or non-volatile electronic memory media.

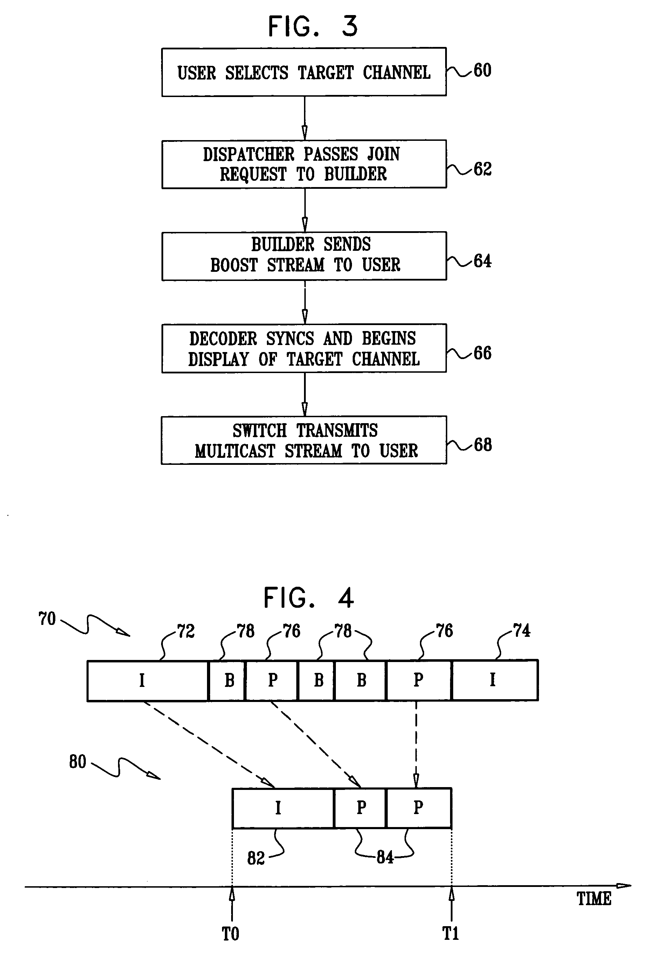

Fig. 3 is a flow chart that schematically illustrates a method for channel switching in system 20, in accordance with an embodiment of the present invention. The method is initiated when user 34 selects a new channel (referred to herein as the "target channel"), at a channel selection step 60. As noted above, in response to the user selection, decoder 30 sends a join request to multiplexer 26 of the user's NSP.

Switch 44 routes the request to dispatcher 54, at a request processing step 62. In response to this signal, the dispatcher determines whether the time remaining until the next I-frame in the requested channel is less then a predetermined threshold. If so, the dispatcher simply instructs switch 44 to connect the user to the requested channel. Otherwise, the dispatcher chooses one of builders 50, and instructs the builder to generate a boost stream, based on the frames stored in memory 42 for that channel. The structure of the boost stream is described hereinbelow with reference to Fig. 4. Builder 50 transmits the boost stream to the new client via switch 44, at a boost transmission step 64. The switch is operated so that other clients who previously joined the target channel continue to receive the original video stream, while new clients temporarily receive the boost stream.

The boost stream typically begins with the most recent I-frame that has been stored in buffer 42. This I-frame may be followed by one or more difference-coded frames, depending upon the time remaining until the next I-frame in the multicast stream. Typically, the boost stream also contains appropriate audio data from the multicast stream to accompany the video frames in the boost segment. Upon receiving the beginning I-frame in the boost stream, decoder 30 immediately synchronizes on the target channel and begins to display pictures on television set 32, at a display initiation step 66. Typically, multiplexer 26 is designed so that the delay between selection of the target channel at step 60 and the display of the first picture at step 66 is no more than about 100-200 msec (although shorter or longer delay periods are possible, depending on system capabilities and equipment constraints). By contrast, in the absence of this boost function, the delay until display of the new channel could be from one second to several seconds long, depending on the compression scheme that is used.

In some cases, if multiple clients submit requests to join the assigned channel during a given interval between two I-frames in the multicast stream, dispatcher 54 may instruct builder 50 to generate and transmit multiple boost streams during this interval. If the client requests are received roughly simultaneously, the builder may transmit the same boost stream to multiple clients. Alternatively, the boost streams may start at different times and therefore may contain different frame sequences (even if they are based on the same frames from buffer 42). Alternatively, when multiple user requests to join a given channel are received at staggered times during the interval between two I-frames, the dispatcher may assign multiple builders to generate and transmit different boost streams for the same channel at staggered starting times.

Builder 50 times each boost stream so that it will terminate at an anchor point (i.e., an I-frame) in the multicast stream of the target channel. At this point, the builder (or dispatcher 54) instructs switch 44 to begin transmitting the normal multicast stream of the target channel to the user, at a multicast initiation step 68. It is desirable that builder 50 terminate the boost stream in such a way that the transition from the boost stream to the multicast stream will be smooth (and thus invisible to the user). For this purpose, the builder generates the boost stream in compliance with the syntactic requirement of the multicast transport mechanism. For an MPEG transport stream, for example, the builder may build the boost stream so that it contains only full transport packets. Optionally, builder 50 may also set the discontinuity flag in the header of the first transport packet of the multicast stream that is sent to the new client following the boost stream. This flag is provided by the MPEG standard to indicate that continuity requirements (such as buffer filling level) are not honored at this point in the stream and can help decoder 30 in synchronizing on the next I-frame in the multicast stream.

There are a number of different ways in which the boost stream can be constructed in order to meet the criteria described above. For example, in one embodiment, the boost stream may simply be a delayed duplicate of the original multicast transport stream. Some of the frames at the end of the duplicate stream may be eliminated so that the boost stream terminates at the appropriate time. Additionally or alternatively, builder 50 may transmit the boost stream to decoder 30 at an increased bit rate relative to the base bit rate required for the multicast stream.

Fig. 4 is a timing diagram that schematically illustrates construction and transmission of a boost stream 80 based on a portion 70 of a multicast stream, in accordance with another embodiment of the present invention. The multicast stream comprises an I-frame 72, followed by B-frames 78 and P-frames 76, then followed by another I-frame 74. The P-frames encode differences with respect to the preceding I- or P-frame, while the B-frames encode differences with respect to both preceding and succeeding frames.

Builder 50 begins transmission of boost stream 80 at a time T0, which is determined by the time at which the builder receives the join request submitted by the client (or clients) to whom the boost stream is to be directed. The builder begins the boost stream with an I-frame 82, which is identical to or derived from I-frame 72. I-frame 82 is followed by P-frames 84, which are identical to or derived from P-frames 76. B-frames 78 are removed. As a result, boost stream 80 is short enough to be transmitted between T0 and T1, the time at which I-frame 74 begins in the multicast stream. Builder 42 terminates boost stream 80 at this point and joins the client to the multicast stream. Decoder 30 is not aware that the boost stream has been specially processed. From the client's perspective, it has simply joined a multicast group and has seamlessly begun to receive and display the multicast program.

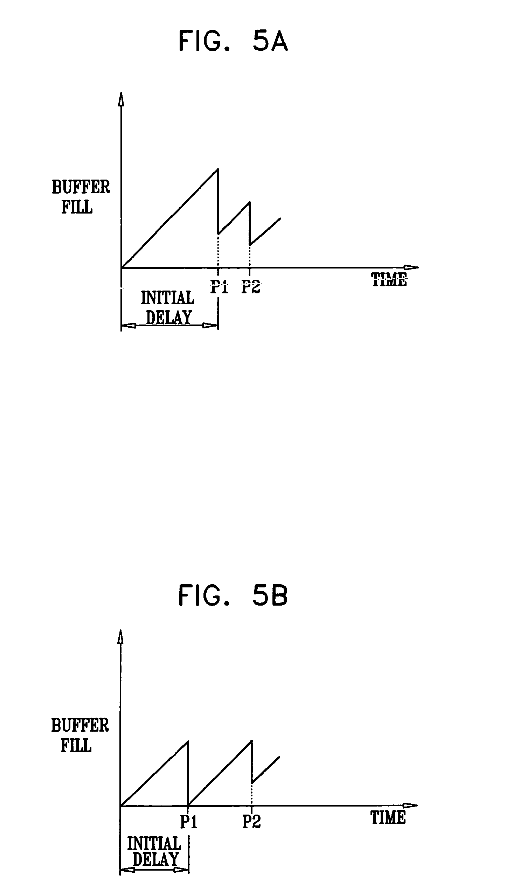

If there is not sufficient time between T0 and T1 to transmit all the P-frames in the relevant portion of the multicast stream, builder 42 may eliminate some or all of the P-frames. Since each P-frame requires the preceding P- or I-frame for decoding, the builder removes the P-frames starting from the end of the boost stream (i.e., it would remove the second P-frame 82 in Fig. 5). Removal of the B-frames has no effect on P-frame decoding. In some cases, only I-frame 82 may be transmitted before switching to the multicast stream at time T1. If the join request from the client arrives only a short time before I-frame 74, builder 42 may simply begin transmitting the multicast stream to the client at this I-frame without an intervening boost stream, as noted above.

Since the video content of boost stream 80 differs from portion 70 of the multicast stream, the transport stream that was used to encapsulate portion 70 should not be used to encapsulate the boost stream without making certain changes. Therefore, in one embodiment, builder 42 removes and discards the transport stream data that came with portion 70 and generates new transport packets to encapsulate boost stream 80. In another embodiment, builder 42 recomputes certain parts of the transport stream data (such as timestamps) to accord with the reduced video frame content of the boost stream. In yet another embodiment, if decoder 30 is capable of receiving and processing video data without transport stream encapsulation, builder 42 may simply transmit boost stream 80 without encapsulation. This latter embodiment is advantageous in that it reduces the processing burden on builder 42, so that the builder can generate a larger number of boost streams to different clients if necessary.

Additionally or alternatively, builder 42 may apply stronger compression to frames 82 and 84 in the boost stream than is applied to the corresponding frames in the multicast stream. For example, the builder may reduce the number of discrete cosine transform (DCT) coefficients that are used in encoding each of the frames. This compression is lossy, so that user 34 will, as a result, see pictures of reduced quality during the boost phase. On the other hand, increasing the compression of the individual frames may permit builder 42 to transmit a larger number of frames in the boost stream, so that the transition to the multicast stream is smoother, and the picture on television set 32 does not visibly "jump" during or at the end of the boost phase.

Figs. 5A and 5B are plots that schematically show fill levels of a video buffer in decoder 30, in accordance with an embodiment of the present invention. These figures illustrate a method for further reducing the initial delay between user selection of a target channel and the display of the first picture in the target channel. As shown in Fig. 5A, data streaming in from multiplexer 26 gradually fill the decoder buffer. The data are then read out to reconstruct successive pictures P1, P2, etc. In order to avoid possible buffer underflow or overflow, the video encoder instructs the decoder to present the first picture in the stream only after a certain initial delay. Typically, the delay is chosen so that at least part of the data in P2 will have entered the decoder buffer before P1 is presented. The video encoder writes the required delay in a field of the MPEG-2 picture header that is known as the vbv_delay.

The initial delay in displaying P1 that is incurred at decoder 30 due to the vbv delay is added to the inherent delay between selection of the new channel by user 34 and the beginning of transmission of the boost stream from multiplexer 26. In order to reduce the total delay, builder 42 may reduce the value of the vbv_delay in the initial frame of the boost stream that it transmits at step 64. The result, as shown in Fig. 5B, is that the delay in displaying P1 is reduced. In the scenario illustrated in this figure, the value of vbv_delay is determined so that decoder 30 displays P1 as soon as the first I-frame has entered the buffer. Consequently, the buffer will be empty (or nearly empty) when P1 is displayed. In order to avoid possible buffer underflow thereafter, display of P2 (and possibly of one or more subsequent frames) by decoder 30 is delayed. This delay may be invoked by builder 42, for example, by appropriately setting the value of the presentation time stamp (PTS) field in the PES (packetized elementary stream) layer header of the MPEG transport stream.

As noted earlier, although the embodiments described hereinabove refer specifically to MPEG standards and use MPEG terminology, the principles of the present invention may similarly be applied in digital broadcast systems using other compression and packet transport schemes. For example, the methods and systems described above may be adapted to operate with MPEG-4 part 10 streams (also known as H.264 or Advanced Video Codec), as well as with the SMPTE VC-1 video codec (contributed by Microsoft).

It will thus be appreciated that the embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

## Claims

1. A method for digital video distribution, comprising:
transmitting a multicast stream (70) over a network (20), the stream comprising a sequence of frames (72, 74, 76, 78) encoding video data, the sequence containing anchor points;
receiving, at a time subsequent to a first anchor point and prior to a second anchor point in the multicast stream, a request from a client (30) to begin receiving the multicast stream;
responsively to the request, generating a boost stream (80) comprising at least a portion of the video data in the frames between the first and second anchor points;
transmitting the boost stream to the client during an interval between the time at which the request was received and the second anchor point in the multicast stream, so as to cause the client to display the video data beginning from the first anchor point; and
upon completing transmission of the boost stream, transmitting the multicast stream to the client beginning from the second anchor point.

2. The method according to claim 1, wherein the sequence of frames comprises intracoded frames (I-frames) interspersed with difference-coded frames, and wherein each of the anchor points corresponds to one of the I-frames, wherein the boost stream comprises a first I-frame, which corresponds to the first anchor point, and further comprises a subset of the difference-coded frames between the first I-frame and a second I-frame, which corresponds to the second anchor point.

3. The method according to claim 2, wherein the difference-coded frames comprise predictive frames (P-frames) and bi-directional frames (B-frames), and wherein the subset of the difference-coded frames comprises one or more of the P-frames, but not the B-frames.

4. The method according to any of the preceding claims, wherein generating the boost stream comprises determining a number of the frames between the first and second anchor points to be included in the boost stream responsively to a duration of the interval between the time at which the request was received and the second anchor point in the multicast stream.

5. The method according to any of the preceding claims, wherein the multicast stream is transmitted at a base bit rate, and wherein transmitting the boost stream comprises conveying the boost stream to the client at an increased bit rate relative to the base bit rate.

6. The method according to any of the preceding claims, wherein the video data in the multicast stream comprise compressed data, and wherein transmitting the boost stream comprises compressing the video data in the boost stream more strongly than the video data in the multicast stream.

7. The method according to any of the preceding claims, wherein the multicast stream is encoded so as to cause the client to wait before displaying the video data for a predetermined delay after receiving an initial frame of the video data, and wherein transmitting the boost stream comprises encoding the boost stream so as to cause the client to begin to display the video data in the boost stream with a reduced delay, which is shorter than the predetermined delay.

8. A multicast transmitter (26), which is operative to transmit a multicast stream (70) over a network (20), the stream including a sequence of frames (72, 74, 76, 78) encoding video data, the sequence containing anchor points, the multicast transmitter comprising:
a memory (42), which is coupled to store the video data; and
boost generation logic (50, 54), which is coupled to the memory and is arranged to receive, at a time subsequent to a first anchor point and prior to a second anchor point in the multicast stream, a request from a client (30) to begin receiving the multicast stream, and to generate, responsively to the request, a boost stream (80) comprising at least a portion of the video data in the frames between the first and second anchor points, and to convey the boost stream to the client during an interval between the time at which the request was received and the second anchor point in the multicast stream, so as to cause the client to display the video data beginning from the first anchor point, and to cause the transmitter, upon completing transmission of the boost stream, to transmit the multicast stream to the client beginning from the second anchor point.

9. The transmitter according to claim 8, wherein the transmitter is arranged to transmit multiple channels of video content to multiple clients, and wherein the request comprises an instruction from a user viewing a first channel to switch to a second channel, and
wherein the boost generation logic comprises a plurality of builders, which are dynamically assignable to produce boost streams for the multiple channels responsively to channel switching requests.

10. A computer software product, for use in conjunction with a multicast transmitter (26), which transmits a multicast stream (70) over a network (20), the stream including a sequence of frames (72, 74, 76, 78) encoding video data, the sequence containing anchor points, the product comprising a computer-readable medium in which program instructions are stored,
wherein the instructions, when read by a computer (50, 54) associated with the transmitter, cause the computer to accept, at a time subsequent to a first anchor point and prior to a second anchor point in the multicast stream, a request from a client (30) to begin receiving the multicast stream, and to generate, responsively to the request, a boost stream (80) comprising at least a portion of the video data in the frames between the first and second anchor points, and to convey the boost stream to the client during an interval between the time at which the request was received and the second anchor point in the multicast stream, so as to cause the client to display the video data beginning from the first anchor point, and to cause the transmitter, upon completing transmission of the boost stream, to transmit the multicast stream to the client beginning from the second anchor point.
